# EUROPÄISCHE PATENTSCHRIFT

(11) **EP 0 849 442 B1**
(45) Veröffentlichungstag und Bekanntmachung des Hinweises auf die Patenterteilung: **31.07.2002**
(21) Anmeldenummer: 97117353.9
(22) Anmeldetag: 08.10.1997
(51) Int. Cl.: F01N 3/20, B60K 13/04

(54) **Kraftfahrzeug mit einer Verbrennungskraftmaschine mit V-Anordnung der Zylinder und Katalysator**
Motor vehicle with an internal combustion engine of V-type and catalytic converter
Véhicule automobile avec un moteur à combustion interne à cylindres disposés en V et pot catalytique

(30) Priorität: 20.12.1996 DE 19653408
(43) Veröffentlichungstag der Anmeldung: 24.06.1998
(73) Patentinhaber: Ford Global Technologies, Inc., Dearborn, Michigan 48126-2490 (US)
(72) Erfinder: Phlips, Patrick, Dr., 50858 Köln (DE); Mayer, Thomas, 50859 Köln (DE); Krzykowski, Heinrich, 58313 Herdecke (DE); Grieser, Klemens, 40764 Langenfeld (DE)
(74) Vertreter: Ritzkowsky, Harald, Dipl.-Ing.

(56) Entgegenhaltungen:
- DE-A- 4 322 949
- DE-U- 9 204 219
- US-A- 5 384 098

## Beschreibung

Die Erfindung betrifft ein Kraftfahrzeug mit einer im Frontbereich angeordneten Verbrennungskraftmaschine, deren Zylinder in V-Anordnung angeordnet sind, wobei die Mittelachse in Fahrtrichtung weist und bei der die Abgase jeder Zylinderreihe über je zwei Abgasleitungen mit unterschiedlichem Querschnitt je einem Katalysator zugeführt werden und die Abgasleitungen mit größerem Querschnitt durch Steuerventilanordnungen absperrbar sind.

Anordnungen dieser Art sind so gestaltet, daß die Abgase jeder Zylinderreihe über gesonderte Abgasleitungen auf der gleichen Seite des Kraftfahrzeuges angeordneten Katalysatoren zugeleitet werden. Diese Anordnung weist jedoch den Nachteil auf, daß für den Fall, daß eine rasche Aufheizung des Katalysators gewünscht wird, die Anordnung einer kurzen Aufheizleitung nicht möglich ist. Sie hätte zwangsläufig annähernd die gleiche Länge wie der Hauptstrang.

Aus US 5,384,098 ist ein Abgasreinigungssystem mit wenigstens zwei Zylinderreihen bekannt, wobei die Abgase jeder Zylinderreihe über jeweils zwei Leitungen Katalysatoren zugeführt werden und wobei diesen Leitungen jeweils als Abgasleitung und als Bypass bezeichnet werden. Die Abgasleitung führt von der auf einer Seite des Motors angeordneten Zylinderreihe zu der jeweils gegenüberliegenden Seite des Motors und dem dort befindlichen Katalysator. Die Bypass-Leitung führt von der auf einer Seite des Motors liegenden Zylinderreihe zu dem auf der gleichen Seite des Motors liegenden Katalysator. Dies dient dazu, einen kurzen Weg von einer Zylinderreihe zu dem auf der gleichen Seite liegenden Katalysator für dessen schnelle Aufheizung zu benutzen, während bei höheren Betriebstemperaturen und aufgeheiztem Katalysator bevorzugt der längere Weg zu dem auf der gegenüberliegenden Seite angeordneten Katalysator benutzt wird. Um den Abgasfluß entsprechend zu steuern, sind in den Abgasleitungen Steuerventilanordnungen vorgesehen. Auf jeder Seite ist die Steuerventilanordnung so ausgebildet, dass das Ventil entweder (im Aufwärmbetrieb) den langen Weg zum Katalysator der gegenüberliegenden Seite verschließt und gleichzeitig den kurzen Weg zu dem auf der gleichen Seite liegenden Katalysator öffnet oder die umgekehrte Einstellung erfolgt. Dazu muß das Ventil entsprechend an der Verzweigung mit geeigneten Ventilsitzen und Steuerorganen angeordnet sein. Dies bedeutet einen zusätzlichen Aufwand sowie die Verwendung von zwei unabhängigen Steuerventilanordnungen, die jeweils räumlich getrennt an den entsprechenden Verzweigungen zwischen Abgasleitung und Bypass angeordnet sein müssen.

Aus DE OS4322949 ist die Verwendung einer Bypassleitung bekannt, die einen geringeren Querschnitt als die Abgasleitung aufweist und die auf kurzem Weg von der Verbrennungskraftmaschine zu dem Katalysator führt. Jedoch ist hier nur die Verwendung für einen Katalysator beschrieben, wobei die Steuerventilanordnung entweder an einem Kühlschalldämpfer oder ebenfalls in der Verzweigung bzw. Einmündung des Bypasses in die Abgasleitung angeordnet ist. Auch hierdurch entsteht besonders für die Verwendung von Verbrennungskraftmaschinen mit mehreren Zylinderreihen ein erhöhter Aufwand.

In DE-U-9204219 sind ebenfalls Bypass-Leitungen mit geringerem Querschnitt beschrieben. Auch hier ist jedoch die Anordnung von Steuerventilen vorgesehen, die unmittelbar im Abzweig von Abgasleitung und Bypass bzw. in dessen unmittelbarer Nähe vorgesehen sind. Auch hierdurch ergibt sich bei Verbrennungskraftmaschinen mit mehreren Zylinderreihen ein erhöhter Aufwand für die Steuerventilanordnungen.

Entsprechend ist es die Aufgabe der Erfindung, eine Anordnung vorzuschlagen, die diese Nachteile vermeidet und bei der die Anordnung so getroffen ist, daß sowohl Abgasleitungen mit größerem Querschnitt und erheblicher Länge mit Bypass-Leitungen von kleinerem Durchmesser und kurzer Ausführung kombiniert werden können.

Diese Aufgabe wird dadurch gelöst, daß die Abgase einer Zylinderseite über einen Abgaskrümmer und eine Abgasleitung jeweils auf die andere Seite der Verbrennungskraftmaschine geleitet und einem auch auf dieser Seite befindlichen Katalysator zugeleitet werden, wobei in den Abgasleitungen jeweils eine Steuerventilanordnung vorgesehen ist, mit der die Abgasleitungen absperrbar sind und daß zwischen der Abgasleitung einer Zylinderreihe und der Abgasleitung der anderen Zylinderreihe jeweils eine Bypass-Leitung mit wesentlich geringerem Querschnitt als die Abgasleitungen vorgesehen ist, wobei die Bypass-Leitungen einen Bereich der Abgasleitungen nahe den Abgaskrümmern einer Zylinderreihe mit einem Bereich nahe der Einmündung der Abgasleitung in dem auf der gleichen Seite des Kraftfahrzeuges befindlichen Katalysator für die andere Zylinderreihe verbinden.

Auf diese Weise wird bei einem gewünschten raschen Aufheizen des Katalysators einer Zylinderreihe die Abgasleitung dieser Zylinderreihe abgesperrt und die Abgase gelangen über eine Bypass-Leitung mit geringerem Querschnitt unmittelbar zur Abgasleitung, die unmittelbar in den Katalysator jedoch der anderen Zylinderreihe einmündet. Entsprechendes geschieht mit den Abgasen der anderen Zylinderreihe. Dadurch ist eine rasche Aufheizung beider Katalysatoren sichergestellt. Auf der anderen Seite wird durch die Führung der Abgasleitungen einer Zylinderreihe zum Katalysator auf der anderen Seite des Kraftfahrzeuges in wünschenswerter Weise die Länge der Abgasleitung verlängert, was den Kühleffekt vergrößert; trotzdem werden die Bypass-Leitungen in gewünschter Weise kurz gehalten.

Wenn es die Raumverhältnisse im Kraftfahrzeug zulassen, können die Abgasleitungen in Fahrtrichtung und in Draufsicht gesehen hinter der Verbrennungskraftmaschine angeordnet sein. Wird jedoch eine größere Kühlung während des Normalbetriebes des Kraftfahrzeuges angestrebt, so kann die Länge der Abgasleitungen dadurch verlängert werden, daß die Abgasleitungen in Fahrtrichtung und in Draufsicht gesehen vor der Verbrennungskraftmaschine angeordnet sind.

Zweckmäßigerweise können bei jeder Anordnung die Steuerventilanordnungen zu einer Baueinheit zusammengefaßt sein.

Es ist möglich, die Auspuffleitungen am Ende des Kraftfahrzeuges zu einem Auspuff zusammenzufassen.

Ausführungsbeispiele der Erfindung sind in den Figuren dargestellt.

Es zeigen:
- Fig. 1: eine perspektivische Darstellung der wesentlichen Elemente der Erfindung, eine Ausführungsform zeigend;
- Fig. 2: eine Draufsicht von unten auf die erfindungsgemäße Anordnung gemäß Fig. 1;
- Fig. 3: eine Draufsicht von unten auf eine andere Ausführungsform der Erfindung.

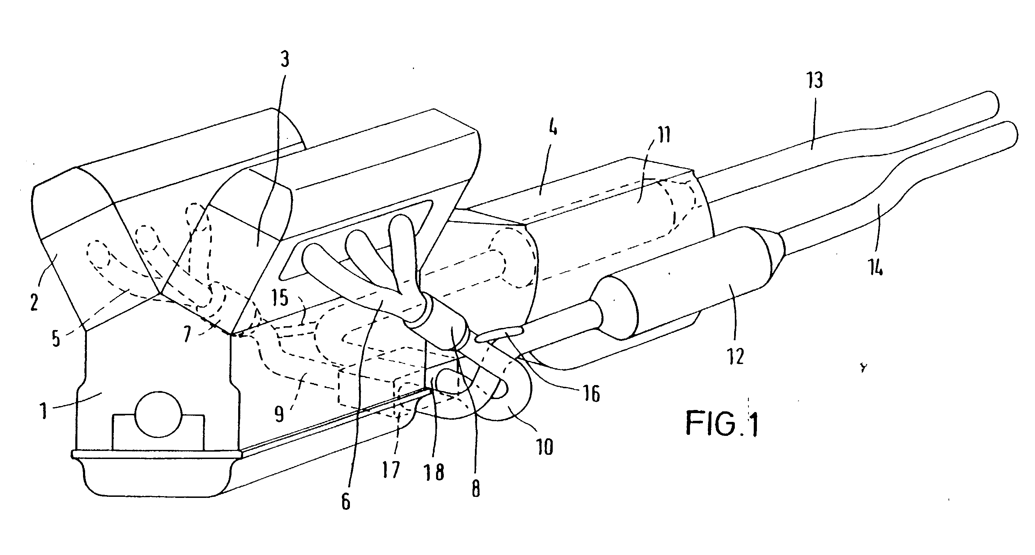

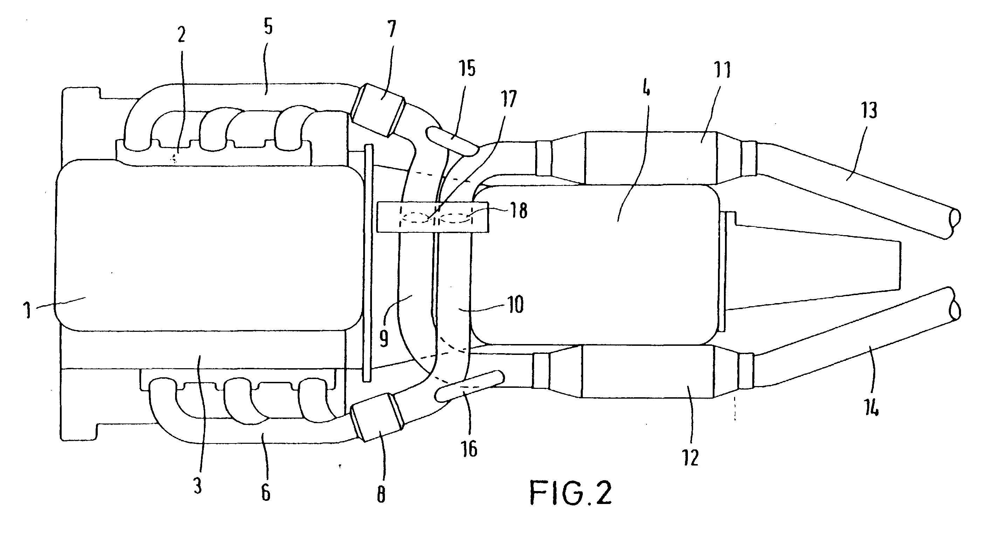

Bei einem insbesondere in den Figuren 1 und 2 dargestellten Ausführungsbeispiel der Erfindung besitzt eine Verbrennungskraftmaschine 1 mit V-Anordnung der Zylinder, im Besipiel sechs Zylinder, zwei mit 2 und 3 bezeichnete Zylinderreihen. In Fährtrichtung gesehen hinter der Verbrennungskraftmaschine ist ein Getriebe 4 angeordnet. Die Abgase der Verbrennungskraftmaschine 1 gelangen über Abgaskrümmer 5 und 6 zu Abgasleitungen 9 und 10. Zwischen den Abgaskrümmern 5 bzw 6 ist je ein Entkoppelungselement 7 bzw 8 angeordnet.

Die Abgasleitungen 9 und 10 für je eine Zylinderreihe verlaufen beim Ausführungsbeispiel in Fahrtrichtung gesehen hinter der Verbrennungskraftmaschine zur anderen Seite des Kraftfahrzeuges und gelangen dann zu einem auf dieser Seite angeordneten Katalysator 11 bzw 12. Der Verlauf der Abgasleitungen 9 und 10 ist dabei vorzugsweise unterhalb des Bereiches Verbrennungskraftmaschine/Getriebe 4 vorgenommen. Bei der Ausführungsform gemäß Fig. 1 und 2 befindet sich in Fahrtrichtung gesehen hinter der Verbrennungskraftmaschine 1 eine Steuerventilanordnung 17 bzw 18, mit der temperaturgesteuert die Leitungen 9 und 10 abgesperrt werden können, um ein rasches Aufheizen der Katalysatoren zu erreichen. Dieses geschieht durch Bypass-Leitungen 15 und 16, die einen Bereich nahe den Abgaskrümmern 5, 6 jeder Zylinderreihe 2, 3 mit der Abgasleitung verbindet, die der anderen Zylinderreihe zugeordnet ist. Dadurch erfolgt eine Führung der Abgase durch die Abgasleitungen gewissermaßen über Kreuz zur anderen Seite des Kraftfahrzeuges, während die Bypass-Leitungen einen direkten und kurzen Weg zwischen den entsprechenden Abgaskrümmern und dem Katalysator, der eigentlich der anderen Zylinderreihe zugeordnet ist, herstellt, und zwar auf der gleichen Seite des Kraftfahrzeuges.

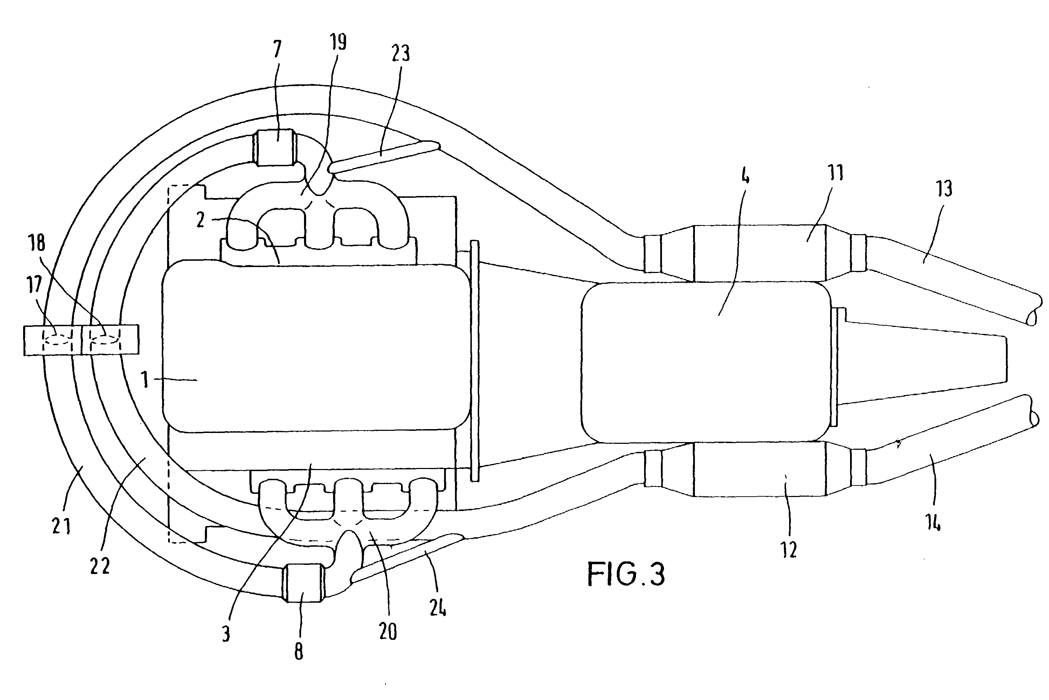

Bei einem anderen Ausführungsbeispiel der Erfindung, wie in Fig. 3 dargestellt, verlaufen die Abgasleitungen 21 und 22 von den Abgaskrümmern 19 und 20 zunächst in Fahrtrichtung gesehen nach vorne und werden um die Verbrennungskraftmaschine herumgeführt zur anderen Seite des Kraftfahrzeuges; dort erfolgt dann die Zuleitung zu dem Katalysator auf einer Seite des Kraftfahrzeuges. Auch hier sind entsprechende Bypass-Leitungen vorgesehen, die mit 23 und 24 bezeichnet sind. Bei diesem Ausführungsbeispiel ist die Steuerventilanordnung 17 bzw. 18 in Fahrtrichtung gesehen vor der Verbrennungskraftmaschine angeordnet.

Alle Bypass-Leitungen beider Ausführungsbeispiele sind in der Länge wesentlich kürzer als die Abgasleitungen, in denen sich die Steuerventilanordnungen 17, 18befinden; außerdem sind alle Bypass-Leitungen 15, 16, 23, 24 mit einem Querschnitt ausgestattet, der wesentlich kleiner ist als der Querschnitt der Abgasleitungen 9, 10, 21, 22.

Bei den Ausführungsformen schließen sich an die Katalysatoren 11 und 12 Auspuffleitungen 13 und 14 an; diese können in einen gemeinsamen Auspuff münden.

## Patentansprüche

1. Kraftfahrzeug mit einer im Frontbereich angeordneten Verbrennungskraftmaschine (1), deren Mittelachse in Fahrtrichtung weist und die wenigstens zwei Zylinderreihen (2, 3) aufweist, wobei die Abgase jeder Zylinderreihe (2, 3) über je zwei Leitungen (9, 10, 15, 16), jeweils einer Abgasleitung (9, 10, 21, 22) und jeweils einem Bypass (15, 16, 23, 24), je einem Katalysator (11,12) zugeführt werden wobei die Abgase einer ersten Zylinderreihe (2) bzw. einer zweiten Zylinderreihe (3) über einen ersten Abgaskrümmer (5) bzw. zweiten Abgaskrümmer (6) und eine erste Abgasleitung (9, 22) bzw. zweite Abgasleitung (10, 21) auf die jeweils andere Seite der Verbrennungskraftmaschine geleitet und dem auf dieser anderen Seite befindlichen Katalysator (12) für die erste Abgasleitung (9, 22) bzw. dem Katalysator (11) für die zweite Abgasleitung (10, 21) zugeleitet werden,
wobei in der ersten und zweiten Abgasleitung (9, 10, 21, 22) jeweils eine Steuerventilanordnung (17, 18) vorgesehen ist, mit der die Abgasleitungen (9, 10, 21, 22) absperrbar sind und
dass zwischen der ersten Abgasleitung (9, 22) und der zweiten Abgasleitung (10, 21) eine erste Bypassleitung (15, 23) vorgesehen ist, wobei diese erste Bypassleitung (15, 23) einen Bereich der ersten Abgasleitung (9, 22) nahe dem Abgaskrümmer (5) der ersten Zylinderreihe (2) mit einem Bereich nahe der Einmündung der zweiten Abgasleitung (10, 21) in den auf der gleichen Seite des Kraftfahrzeuges befindlichen Katalysator (11) für die zweiten Zylinderreihe (3) verbindet und
dass zwischen der zweiten Abgasleitung (10, 21) und der ersten Abgasleitung (9, 22) eine zweite Bypassleitung (16, 24) vorgesehen ist, wobei diese zweite Bypassleitung (16, 24) einen Bereich der zweiten Abgasleitung (10, 21) nahe dem Abgaskrümmer (6) der zweiten Zylinderreihe (3) mit einem Bereich nahe der Einmündung der ersten Abgasleitung (9, 22) in den auf der gleichen Seite des Kraftfahrzeuges befindlichen Katalysator (12) für die erste Zylinderreihe (2) verbindet,
**dadurch gekennzeichnet, dass**
die Zylinderreihen (2, 3) in V-Anordnung stehen, die Bypassleitungen (15, 16, 23, 24) einen wesentlich geringeren Querschnitt als die Abgasleitungen (9, 10, 21, 22) aufweisen und die Steuerventilanordnungen (17, 18) zu einer Baueinheit zusammengefasst sind.

2. Kraftfahrzeug gemäß Anspruch 1, **dadurch gekennzeichnet, dass** die Abgasleitungen (9, 10) in Fahrtrichtung und in Draufsicht gesehen hinter der Verbrennungskraftmaschine (1) angeordnet sind.

3. Kraftfahrzeug nach Anspruch 1, **dadurch gekennzeichnet, dass** die Abgasleitungen (21, 22) in Fahrtrichtung und in Draufsicht gesehen vor der Verbrennungskraftmaschine (1) angeordnet sind.

4. Kraftfahrzeug nach einem der Ansprüche 1 bis 3, **dadurch gekennzeichnet dass** die Auspuffleitungen (13, 14) am Ende des Kraftfahrzeuges zu einem gemeinsamen Auspuff zusammengefasst sind.

## Claims

1. A motor vehicle having a front-mounted internal combustion engine with its cylinders in a "V"-arrangement, with the centre line pointing in the direction of travel, wherein the exhaust gases from each bank of cylinders are passed via two exhaust pipes of different cross-section to a respective catalytic converter and the exhaust pipes having the greater cross-section can be shut off by means of control valve systems,
**characterised in that**
the exhaust gases from the cylinders (2 and 3 respectively) on each one side are led via an exhaust manifold (5 and 6 respectively) and an exhaust pipe (9 and 10 respectively) to the respective other side of the engine and to a catalytic converter (12 and 13 respectively) also located on said other side, with a control valve unit (17, 18) being incorporated in each of the exhaust pipes (9, 10) by which the exhaust pipes (9, 10) can be shut off, and that between the exhaust pipe (9 or 10) and the exhaust pipe (10 or 9) in each case a by-pass pipe (15 or 16 respectively) having a substantially smaller cross-section than the exhaust pipes (9, 10) is provided, said by-pass pipes (15, 16 respectively) connecting a region of the exhaust pipes (9, 10) near to the exhaust manifold of one bank of cylinders to a region near where the exhaust pipe enters the catalytic converter for the other bank of cylinders, which is located on the same side of the vehicle.

2. A motor vehicle according to claim 1, **characterised in that** the exhaust pipes (9, 10) are arranged behind the engine (1) (from the point of view of the direction of travel and viewed from above).

3. A motor vehicle according to claim 1, **characterised in that** the exhaust pipes (21, 22) are arranged in front of the engine (1) (from the point of view of the direction of travel and viewed from above).

4. A motor vehicle according to any of claims 1 to 3, **characterised in that** the control valve units (17, 18) are combined to form a common component.

## Revendications

1. Véhicule automobile avec un moteur à combustion interne (1) disposé dans une partie avant, dont l'axe médian est orienté dans la direction d'avance et qui présente au moins deux rangées de cylindres (2, 3), les gaz d'échappement de chaque rangée de cylindres (2, 3) étant acheminés à un catalyseur respectif (11, 12) par le biais de deux conduites dans chaque cas (9, 10, 15, 16), une conduite d'échappement (9, 10, 21, 22) et une dérivation (15, 16, 23, 24) respectives, les gaz d'échappement d'une première rangée de cylindres (2), respectivement d'une deuxième rangée de cylindres (3) étant guidés à chaque fois vers l'autre côté du moteur à combustion interne par le biais d'un premier tuyau coudé d'échappement (5), respectivement d'un deuxième tuyau coudé d'échappement (6) et d'une première conduite d'échappement (9, 22), respectivement d'une deuxième conduite d'échappement (10, 21), et étant amenés au catalyseur (12) pour la première conduite d'échappement (9, 22) se trouvant sur cet autre côté, respectivement au catalyseur (11) pour la deuxième conduite d'échappement (10, 21),
dans la première et la deuxième conduites d'échappement (9, 10, 21, 22), à chaque fois un agencement de soupape de régulation (17, 18) étant prévu, avec lequel les conduites d'échappement (9, 10, 21, 22) peuvent être obturées, et entre la première conduite d'échappement (9, 22) et la deuxième conduite d'échappement (10, 21) une première conduite de dérivation (15, 23) étant prévue, cette première conduite de dérivation (15, 23) reliant une zone de la première conduite d'échappement (9, 22) près du tuyau coudé d'échappement (5) de la première rangée de cylindres (2) à une zone près de l'embouchure de la deuxième conduite d'échappement (10, 21) dans le catalyseur (11) pour la deuxième rangée de cylindres (3), se trouvant du même côté du véhicule automobile, et
entre la deuxième conduite d'échappement (10, 21) et la première conduite d'échappement (9, 22) une deuxième conduite de dérivation (16, 24) étant prévue, cette deuxième conduite de dérivation (16, 24) reliant une zone de la deuxième conduite d'échappement (10, 21) près du tuyau coudé d'échappement (6) de la deuxième rangée de cylindres (3) à une zone près de l'embouchure de la première conduite d'échappement (9, 22) dans le catalyseur (12) pour la première rangée de cylindres (2), se trouvant du même côté du véhicule automobile,
**caractérisé en ce que**
les rangées de cylindres (2, 3) sont agencées en V, les conduites de dérivation (15, 16, 23, 24) présentent une section transversale considérablement moins grande que les conduites d'échappement (9, 10, 21, 22) et les agencements de soupapes de régulation (17, 18) sont assemblés pour former une unité de construction.

2. Véhicule automobile selon la revendication 1, **caractérisé en ce que** les conduites d'échappement (9, 10), vu dans la direction d'avance et en vue de dessus, sont disposées derrière le moteur à combustion interne (1).

3. Véhicule automobile selon la revendication 1, **caractérisé en ce que** les conduites d'échappement (21, 22), vu dans la direction d'avance et en vue de dessus, sont disposées devant le moteur à combustion interne (1).

4. Véhicule automobile selon l'une. quelconque des revendications 1 à 3, **caractérisé en ce que** les conduites du pot d'échappement (13, 14) à l'extrémité du véhicule automobile sont assemblées pour former un pot d'échappement commun.
